(19) **Europäisches Patentamt / European Patent Office / Office européen des brevets**

(11) **EP 2 697 114 B1**

(12) # FASCICULE DE BREVET EUROPEEN

(45) Date de publication et mention de la délivrance du brevet:
**14.09.2016 Bulletin 2016/37**

(21) Numéro de dépôt: **12724669.2**

(22) Date de dépôt: **13.04.2012**

(51) Int Cl.:
**B64C 11/18** *(2006.01)*  **B64C 11/48** *(2006.01)*
**B64C 23/06** *(2006.01)*

(86) Numéro de dépôt international:
**PCT/FR2012/050825**

(87) Numéro de publication internationale:
**WO 2012/140385 (18.10.2012 Gazette 2012/42)**

(54) **DISPOSITIF DE PROPULSION A HELICES CONTRAROTATIVES ET COAXIALES NON-CARENEES**

ANTRIEBSVORRICHTUNG MT UNGEFÜHRTEN GEGENDREHUNGS- UND KOAXIALROTOREN

PROPULSION DEVICE HAVING UNDUCTED COUNTER-ROTATING AND COAXIAL ROTORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2011  FR 1153315**

(43) Date de publication de la demande:
**19.02.2014  Bulletin 2014/08**

(73) Titulaires:
- **SNECMA**
  **75015 Paris (FR)**
- **Centre De Recherche En Aeronautique Asbl - Cenaero**
  **6041 Gosselies (BE)**

(72) Inventeurs:
- **DEJEU, Clément, Marcel, Maurice**
  **F-77370 Fontenailles (FR)**

- **PASCAL, Sébastien**
  **F-76133 Epouville (FR)**
- **TALBOTEC, Jérôme**
  **F-77380 Combs la Ville (FR)**
- **LEBORGNE, Michaël**
  **7331 Beaudour (BE)**
- **LEPOT, Ingrid Irène Catherine**
  **4557 Tiniot (BE)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**EP-A2- 2 287 072   FR-A1- 2 935 349**
**FR-A1- 2 938 502   US-A- 5 190 441**

**EP 2 697 114 B1**

## Description

Arrière-plan de l'invention

La présente invention concerne une pale d'hélice ainsi qu'un dispositif de propulsion comportant une hélice amont non-carénée et une hélice aval contrarotative et coaxiale, et un procédé de suppression d'un bruit d'interaction entre la première et la deuxième hélice contrarotative.

Dans le contexte de la présente description, on entend par « amont » et « aval » les directions respectivement en amont et aval de l'écoulement d'un fluide propulsif à travers des deux hélices. Typiquement, chaque pale d'hélice comporte une pluralité de sections de pale empilées selon un axe radial sur une hauteur h entre un pied et une tête de pale, chaque section de pale s'étendant entre un bord d'attaque et un bord de fuite et entre un intrados et un extrados.

Les paires d'hélices coaxiales et contrarotatives non-carénées, et en particulier celles fonctionnant à grande vitesse, connues aussi sous le nom anglais d'« Open Rotor » (Rotor Ouvert) ou l'abréviation anglaise UDF (« Un-Ducted Fan », c'est-à-dire soufflante non-carénée) présentent un potentiel très important de diminution de la consommation de carburant, et donc de diminution des coûts d'utilisation et d'impact environnemental, dans la propulsion d'aéronefs par rapport aux turboréacteurs à double flux actuels. Toutefois, des tels dispositifs de propulsion avec des hélices rapides coaxiales et contrarotatives non-carénées présentent l'inconvénient d'émissions sonores relativement élevées.

Un des principaux facteurs contribuant à ces émissions sonores réside dans l'interaction entre les hélices contrarotatives, et en particulier dans l'impact des tourbillons de tête de pale de la première hélice, emportés dans le sens d'écoulement du fluide propulsif, contre les pales de la deuxième hélice en aval. A part les nuisances sonores, les gradients de pression que cet impact génère sur la surface de la deuxième hélice peuvent réduire l'efficacité propulsive et constituer en outre une source supplémentaire de fatigue mécanique des pales de la deuxième hélice.

Une première solution ayant été proposée pour ce problème est celle de réduire le diamètre de l'hélice aval, de façon à ce que les tourbillons de bouts de pales de l'hélice amont passent à l'extérieur des bouts des pales de l'hélice aval et n'interagissent pas avec celle-ci. Cependant, un tel rabotage (« clipping » en anglais) des bouts des pales de l'hélice aval n'est pas satisfaisant, car il réduit la performance propulsive.

Une autre solution, proposée dans le brevet US 5,190,441, consiste à augmenter sensiblement le dièdre des bouts des pales de l'hélice amont afin d'affaiblir les tourbillons de tête de pale de manière analogue à celle avec laquelle les ailettes d'extrémité de voilure installées sur certains aéronefs réduisent les effets des tourbillons de bout d'aile. Toutefois, à part une efficacité relativement limitée dans la réduction des tourbillons de tête de pale, cette solution présente aussi des inconvénients structurels.

Dans encore une autre solution, proposée dans la demande de brevet français FR 2 935 349, un flux d'air serait injecté au bout des pales de l'hélice amont pour affaiblir les tourbillons de tête de pale par interaction avec la couche limite. De manière similaire, il a été proposé, dans la demande de brevet européen EP 2 287 072 A2, d'injecter un tel flux d'air au bout des pales pour générer un tourbillon secondaire destiné à déstabiliser le tourbillon de bout de pale. La friction entre deux tourbillons co-rotatifs parallèles est en effet apte à déstabiliser et finalement détruire les deux tourbillons, même dans des cas d'intensités très différentes des deux tourbillons.

Objet et résumé de l'invention

L'invention vise toutefois à proposer une pale d'hélice générant en fonctionnement un tourbillon secondaire déstabilisant le tourbillon de tête de pale afin d'amoindrir une interaction de ce tourbillon de tête de pale avec une hélice aval, mais sans compliquer sensiblement la structure ni la production des pales des hélices amont et aval, et sans affecter sensiblement leur efficacité propulsive.

Dans au moins un mode de réalisation, ce but est atteint grâce au fait que la pale présente une flèche positive en tête de pale et, entre la flèche positive et une flèche négative, un ventre à une position radiale $z_v$, et que chaque section de pale présente une corde suivant une fonction $C(z)$, dont la dérivée $dC/dz$ présente un premier maximum local entre le pied de pale et la position $z_v$, un minimum local entre la position $z_v$ et une position radiale $z_t$ à une distance d'entre $0{,}7 \cdot h$ et $0{,}8 \cdot h$ du pied de pale, et un deuxième maximum local entre la position $z_t$ et la tête de pale. La position $z_v$ du ventre peut notamment être à une distance d'entre $0{,}2 \cdot h$ et $0{,}4 \cdot h$ du pied de pale.

Avec cette géométrie particulière, en fonctionnement, la pale peut générer un tourbillon secondaire à une distance radiale d'entre $0{,}60 \cdot h$ et $0{,}95 \cdot h$ du pied de pale. Cette position du centre du tourbillon secondaire se révèle comme particulièrement avantageuse pour déstabiliser le tourbillon de bout de pale de manière rapide et efficace.

Grâce à sa géométrie, cette pale peut présenter, à une position radiale $z_t$ à une distance d'entre $0{,}7 \cdot h$ et $0{,}8 \cdot h$ du pied de pale, un maximum local d'un coefficient de Zweifel $\psi_A$ de charge par section de pale supérieur à 0,8 et une flèche positive au bord d'attaque. On entend par coefficient de Zweifel $\psi_A$ un coefficient non dimensionnel indicatif de la charge locale de chaque section de pale et suivant l'équation suivante :

$$\psi_A = \frac{\rho v_x s \Delta v_y}{\left(p_{tot,BA} - p_{stat,BF}\right)C}$$

dans laquelle p est la densité du fluide propulsif, $v_x$ la vitesse du fluide propulsif par rapport à la pale en une direction parallèle à l'axe de rotation de l'hélice, $\Delta v_y$ le changement de vitesse du fluide propulsif par rapport à la pale tangentiellement à la rotation de l'hélice entre le bord d'attaque et le bord de fuite de la pale, s le pas d'aube, c'est-à-dire la distance entre pales à cette position radiale $p_{tot,BA}$ la pression totale au bord d'attaque, $p_{stat,BF}$ la pression statique au bord de fuite et C la corde de la section de pale.

A cause du maximum local de la charge locale, indiqué par un maximum local du coefficient de Zweifel $\psi_A$, la pale va connaître un décrochage local au bord d'attaque à cet endroit, décrochage local qui, suite à la flèche positive du bord d'attaque, va générer un tourbillon sur l'extrados à une distance de la tête de pale appropriée pour éviter son enroulement autour du tourbillon de tête de pale en aval du bord de fuite, et donc pour déstabiliser le tourbillon de tête de pale, de manière à minimiser son interaction avec l'hélice aval.

Avantageusement, pour provoquer le maximum local de la charge locale à la position $z_t$, si les sections de pale sont décalées de l'axe radial Z, dans un axe tangentiel Y, suivant une fonction $y_g(z)$, la géométrie de la pale peut par exemple être telle que la dérivée $dy_g/dz$ de la fonction $y_g(z)$ présente un maximum local et un minimum local entre la position $z_t$ et la tête de pale. La charge aérodynamique à la position $z_t$ est ainsi accentuée, provoquant un maximum local du coefficient de Zweifel $\psi_A$, et donc le décrochage et le tourbillon secondaire.

L'invention concerne également un procédé de suppression d'un bruit d'interaction entre une hélice amont non-carénée et une hélice aval contrarotative et coaxiale.

Suivant au moins un mode de réalisation de ce procédé, un tourbillon de tête de pale d'au moins une pale de l'hélice amont est déstabilisé en amont de l'hélice aval par un tourbillon secondaire co-rotatif généré par la même pale et se formant à une distance radiale d'entre 0,60·h et 0,95·h du pied de pale. Pour cela, le bord d'attaque de la pale présente une flèche positive en tête de pale et, entre la flèche positive et une flèche négative, un ventre à une position radiale $z_v$ à une distance inférieure à 0,7·h du pied de pale, et chaque section de pale de ladite pale présente, entre le bord d'attaque et le bord de fuite, une corde suivant une fonction C(z), dont la dérivée $dC/dz$ présente un premier maximum local entre le pied de pale et la position $z_v$, un minimum local entre les positions $z_v$ et $z_t$, et un deuxième maximum local entre la position $z_t$ et la tête de pale. La position $z_v$ du ventre peut notamment être à une distance d'entre 0,2·h et 0,4·h du pied de pale.

Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- les figures 1a et 1b illustrent schématiquement deux exemples de dispositifs de propulsion comprenant des paires d'hélices coaxiales et contrarotatives non-carénées et à rotation rapide,
- la figure 2 illustre schématiquement deux tourbillons co-rotatifs,
- la figure 3 illustre une perspective schématique d'une pale d'hélice générant un tourbillon de tête de pale et un tourbillon secondaire déstabilisant le tourbillon de tête de pale,
- les figures 4a, 4b, et 4c illustrent trois vues d'une pale d'hélice suivant un premier mode de réalisation,
- la figure 5 illustre une courbe du coefficient $\psi_A$ en fonction de la position radiale,
- les figures 6a, 6b et 6c illustrent des courbes de, respectivement, la position du bord d'attaque, la dérivée $dC/dz$ de la corde, et la dérivée $dY/dz$ du décalage tangentiel d'une section de pale en fonction de la position radiale, et

Description détaillée de l'invention

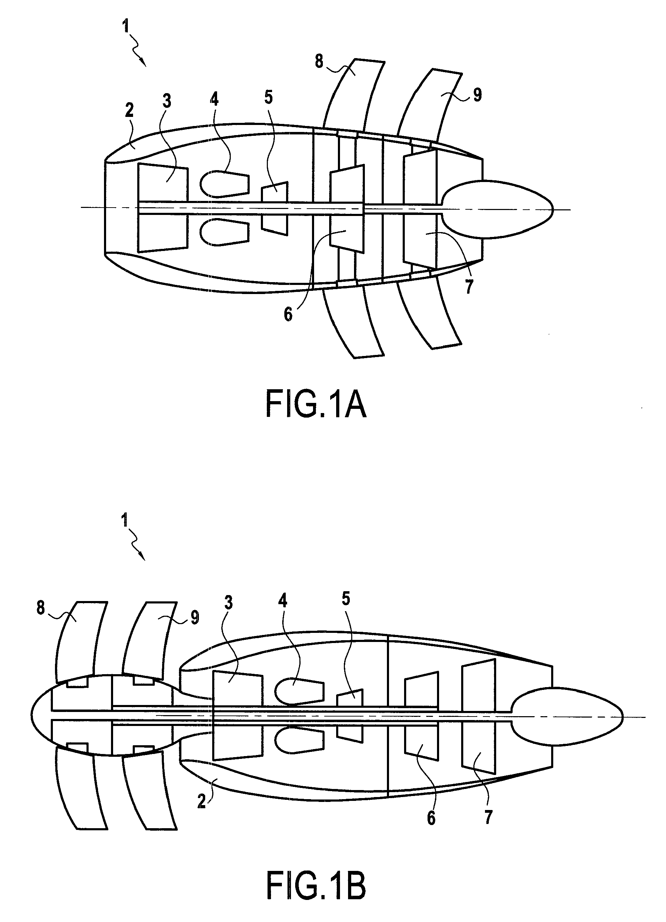

Les figures 1a et 1b représentent chacune un dispositif de propulsion 1 de type turbomachine à hélices contrarotatives, coaxiales et non-carénées (en anglais, « unducted rotor » ou « open rotor »). Le dispositif 1 comporte, à l'intérieur d'une nacelle 2, un compresseur 3, une chambre de combustion 4, une turbine haute pression 5 couplée au compresseur 3 pour son actionnement, et deux turbines basse pression 6, 7 contrarotatives. Le dispositif 1 comporte aussi, à l'extérieur de la nacelle 2, deux hélices 8 et 9 contrarotatives et coaxiales, couplées pour leur actionnement à, respectivement, l'une ou l'autre des deux turbines basse pression 6,7.

Dans une configuration dite « pousseur », les hélices 8, 9 peuvent être situées en aval de la nacelle 2, comme illustré sur la figure 1a. Alternativement, dans une configuration dite « tracteur », les hélices 8, 9 sont situées en amont de la nacelle 2. Dans les deux cas, toutefois, l'hélice aval 9 est exposée aux tourbillons générés par l'hélice amont 8. En particulier les tourbillons de tête de pale de l'hélice amont 8 ont le potentiel de générer des émissions acoustiques et des vibrations importantes par leur impact avec les pales de l'hélice amont 8. Il est ainsi important d'éliminer ces tourbillons de tête de pale, ou au moins de les déstabiliser encore en amont de l'hélice aval 9.

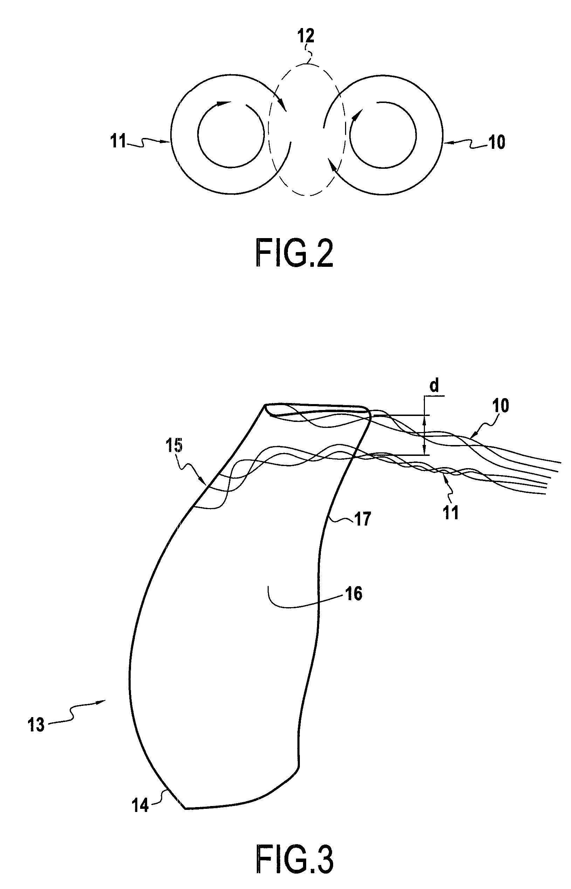

Une méthode pour déstabiliser un tourbillon 10 est celle de générer un autre tourbillon co-rotatif 11 sensiblement parallèle et à proximité du premier tourbillon 10. Comme illustré sur la figure 2, cette situation crée une zone 12 de friction entre les deux tourbillons 10 et 11 contribuant à rapidement dissiper l'énergie des deux.

Sur la figure 3 est illustré un mode de réalisation d'une pale 13 d'hélice générant un tel tourbillon secondaire 11 pour déstabiliser le tourbillon 10 de tête de pale. Dans ce mode de réalisation, le tourbillon 11 naît d'un décrochage local au bord d'attaque 14 de la pale 13. A cause de la flèche positive du bord d'attaque 14 le long de la zone de décrochage 15, un tourbillon secondaire 11 est créé sur l'extrados 16 qui arrive au bord de fuite 17 à une distance radiale d du tourbillon 10 de tête de pale et avec une orientation sensiblement parallèle à celui-ci. Les deux tourbillons 10, 11 étant co-rotatifs, leur friction mutuelle dissipe leur énergie et les déstabilise rapidement.

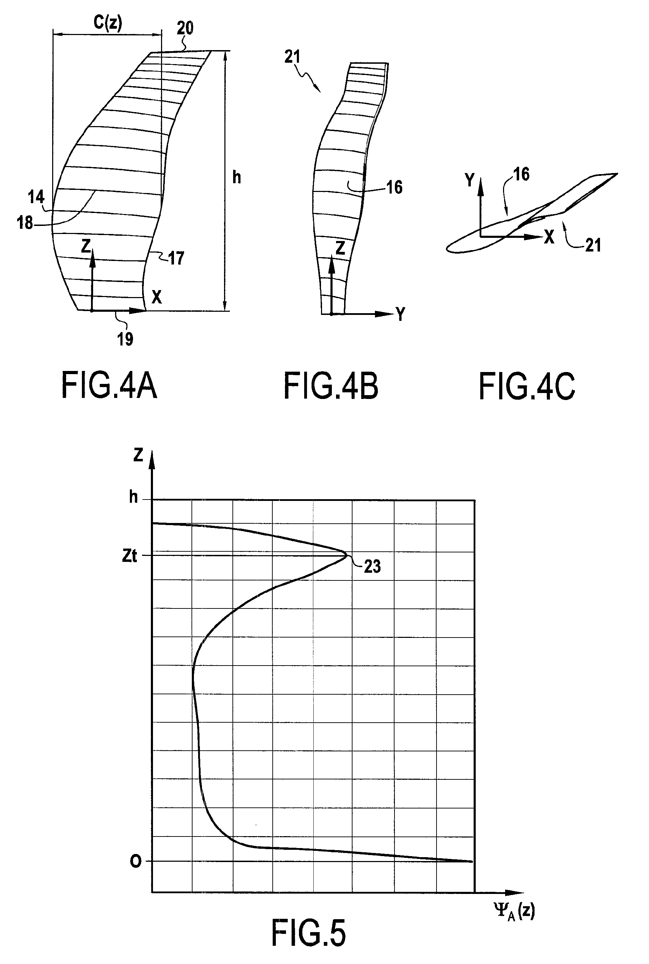

La géométrie de la pale 13 est plus clairement illustrée sur les figures 4a, 4b et 4c, représentant la pale 13, respectivement, de côté, de face et du haut. Les axes X, Y, et Z sont, respectivement, un axe longitudinal parallèle à l'axe de rotation de l'hélice, un axe tangentiel à la rotation de l'hélice, et un axe radial de la pale 13. La pale 13 comporte une pluralité de sections 18 de pale empilées selon l'axe radial Z sur une hauteur h du pied 19 au bout 20, chaque section 18 s'étendant entre le bord d'attaque 14 et le bord de fuite 17 et entre l'intrados 21 et l'extrados 16. Le bord d'attaque 14 présente une flèche négative au pied 19, une flèche positive au bout 20 et, entre la flèche négative et la flèche positive, un ventre 22.

Pour que le tourbillon 10 de tête de pale soit le plus effectivement déstabilisé par le tourbillon secondaire 11, et éviter que les deux tourbillons ne se joignent ou s'enroulent l'un sur l'autre, la distance du centre du tourbillon secondaire 11, à son origine, par rapport au pied de pale 19, est dans une plage entre 0,60 et 0,95 fois la hauteur h. Pour provoquer le décrochage au bon endroit pour ce positionnement du tourbillon 11 et la déstabilisation conséquente du tourbillon 10 de tête de pale, la géométrie de la pale 13 est telle que le coefficient $\psi_A$ en fonction de la position z sur l'axe radial Z, dont la courbe est illustré sur la figure 5, présente un pic 23 important à une position radiale $z_t$ à une distance du pied de pale 19 d'entre 0,7 fois et 0,8 fois la hauteur h. Ce pic atteint un maximum local $\psi_{A,max}$ clairement supérieur à 0,80, par exemple dans une plage entre 0,80 et 1,30

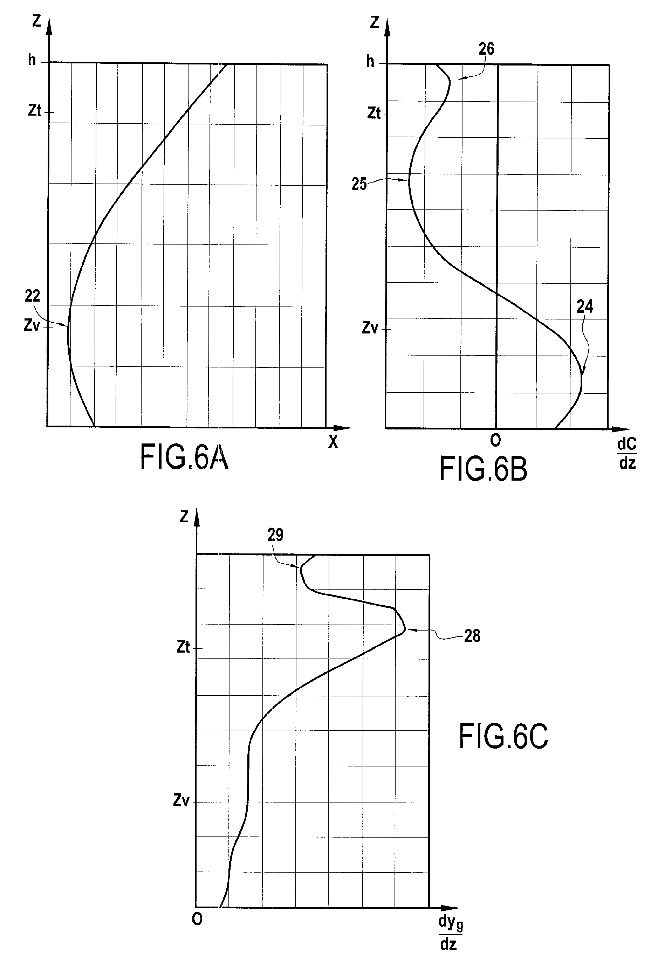

Dans le mode de réalisation illustré, ce maximum local du coefficient de Zweifel $\psi_A$ est conséquence de la géométrie spécifique de la pale 13, et en particulier des paramètres géométriques illustrés sur les figures 6a à 6c. La figure 6a illustre la forme du bord d'attaque 14 de la pale 13. On y peut apprécier que le ventre 22 est situé à une position radiale $z_v$ à une distance du pied de pale 19 d'entre 0,2 fois et 0,4 fois la hauteur h. La figure 6b illustre la dérivée dC/dz de la fonction C(z) déterminant la corde de chaque section de pale 18 en fonction de sa position radiale z dans l'axe Z à partir du pied 19 de pale. On peut y apprécier que cette dérivée dC/dz présente un premier maximum local 24 entre le pied 19 de pale et la position $z_v$ du ventre 22, un minimum local 25 entre la position $z_v$ et la position $z_t$ du pic 23 du coefficient de Zweifel $\psi_A$, et un deuxième maximum local 26 entre la position $z_t$ et le bout 20 de pale.

Ces maxima et minimum locaux 24,26,25 de la dérivée dC/dz correspondent à des points d'inflexion dans la fonction C(z). Ils sont aussi accompagnés, à l'extérieur de la position $z_t$, par au moins un point d'inflexion dans la fonction $y_g(z)$ déterminant le décalage par rapport à l'axe radial Z de chaque section de pale 18 dans l'axe tangentiel Y en direction de l'extrados 16, avec le centre de masse de chaque section 18 comme point de référence. Dans la dérivée $dy_g/dz$ illustrée sur la figure 5c, ce point d'inflexion se manifeste comme un maximum local 28 à l'extérieur de la position $z_t$. Les points d'inflexion de la corde C et du décalage tangentiel Y des sections 18 de chaque côté de la position $z_t$ contribuent à créer à cette position $z_t$ une circulation aérodynamique particulièrement élevée qui se manifeste dans le pic 23 du coefficient de Zweifel $\psi_A$ et le décrochage local sur la zone 15. Un autre point d'inflexion, qui se manifeste dans la dérivée $dy_g/dz$ comme un minimum local 29 entre le maximum local 28 et le bout 20 de pale, contribue à guider le tourbillon secondaire 11 sur l'extrados 16.

La rotation de l'hélice amont génère ainsi, à part un écoulement du fluide propulsif en direction aval et une force de réaction en direction amont, des tourbillons de tête de pale qui sont toutefois déstabilisés, encore en amont de l'hélice aval, par des tourbillons co-rotatifs parallèles dissipant l'énergie des tourbillons de tête de pale de manière à sensiblement réduire les nuisances sonores et charges aérodynamiques supplémentaires induites par l'impact des tourbillons de tête de pale de l'hélice amont sur les pales de l'hélice aval.

Quoique la présente invention ait été décrite en se référant à un exemple de réalisation spécifique, il est évident que des différentes modifications et changements peuvent être effectués sur cet exemple sans sortir de la portée générale de l'invention telle que définie par les revendications. Par conséquent, la description et les dessins doivent être considérés dans un sens illustratif plutôt que restrictif.

## Revendications

1. Pale d'hélice (13) comportant une pluralité de sections de pale (18) empilées selon un axe radial (Z) sur une hauteur h entre un pied (19) et une tête de pale (20), chaque section de pale (18) s'étendant entre un bord d'attaque (14) et un bord de fuite (17) et entre un intrados (21) et un extrados (16), et dans laquelle
le bord d'attaque (14) présente une flèche négative en pied de pale (19), une flèche positive en tête de pale (20) et, entre la flèche négative et la flèche positive, un ventre (22), la pale d'hélice (13) étant **caractérisée en ce que** le ventre (22) est situé à une

position radiale $z_v$ à une distance d'entre 0,2·h et 0,4·h du pied de pale (19), et **en ce que** chaque section de pale (18) présente une corde suivant une fonction C(z), dont la dérivée dC/dz présente un premier maximum local (24) entre le pied de pale (19) et la position $z_v$, un minimum local (25) entre la position $z_v$ et une position radiale $z_t$ à une distance d'entre 0,7·h et 0,8·h du pied de pale (19), et un deuxième maximum local (26) entre la position $z_t$ et la tête de pale (20).

2. Pale d'hélice (13) suivant la revendication 1, dans laquelle chaque section de pale (18) présente un décalage dans un axe tangentiel (Y) en direction de l'extrados (16) suivant une fonction $y_g$(z), dont la dérivée $dy_g$/dz présente un maximum local (28) et un deuxième minimum local (29) entre la position $z_t$ et la tête de pale (20).

3. Dispositif de propulsion (1) comportant une hélice amont (8) non-carénée et une hélice aval (9) contrarotative et coaxiale, dans lequel l'hélice amont (8) comporte au moins une pale (13) suivant l'une quelconque des revendication 1 ou 2, pour que le tourbillon secondaire (11), co-rotatif avec le tourbillon de tête de pale (10) de la même pale (13), déstabilise ledit tourbillon de tête de pale (10) en amont de l'hélice aval (9).

4. Procédé de suppression d'un bruit d'interaction entre une hélice amont (8) non-carénée et une hélice aval (9) contrarotative et coaxiale, dans lequel au moins une pale (13) de l'hélice amont (8) comporte une pluralité de sections de pale (18) empilées selon un axe radial (Z) sur une hauteur h entre un pied (19) et une tête de pale (20), chaque section de pale (18) s'étendant entre un bord d'attaque (14) et un bord de fuite (17), et entre un intrados (21) et un extrados (16), le bord d'attaque (14) de ladite pale (13) présentant une flèche négative en pied de pale (19), une flèche positive en tête de pale (20) et, entre la flèche négative et la flèche positive, un ventre (22), et **caractérisé en ce que** le ventre (22) est situé à une position radiale $z_v$ à une distance d'entre 0,2·h et 0,4·h du pied de pale (19), et **en ce que** chaque section de pale (18) présente, entre le bord d'attaque (14) et le bord de fuite (17), une corde suivant une fonction C(z), dont la dérivée dC/dz présente un premier maximum local (24) entre le pied de pale (19) et la position $z_v$, un minimum local (25) entre la position $z_v$ et une position radiale $z_t$ à une distance d'entre 0,7·h et 0,8·h du pied de pale (19), et un deuxième maximum local (26) entre la position $z_t$ et la tête de pale (20), de manière à ce qu'un tourbillon (10) de tête de pale d'au moins une pale (13) de l'hélice amont (8) soit déstabilisé en amont de l'hélice aval (9) par un tourbillon secondaire (11) co-rotatif généré par la même pale (13).

5. Procédé de suppression suivant l'une quelconque des revendications 4, dans lequel chaque section de pale (18) présente un décalage dans un axe tangentiel (Y) en direction de l'extrados (16) suivant une fonction $y_g$(z), dont la dérivée $dy_g$/dz présente un maximum local (28) et un minimum local (29) entre la position $z_t$ et la tête de pale (20).

**Patentansprüche**

1. Schraubenblatt (13), umfassend eine Vielzahl von Blattabschnitten (18), die entlang einer radialen Achse (Z) über eine Höhe h zwischen einem Blattfuß (19) und einer Blattspitze (20) gestapelt sind, wobei jeder Blattabschnitt (18) sich zwischen einer Eintrittskante (14) und einer Austrittskante (17) sowie zwischen einer Innenseite (21) und einer Aussenseite (16) erstreckt, und bei dem die Eintrittskante (14) eine negative Pfeilung am Blattfuß (19), eine positive Pfeilung an der Blattspitze (20) sowie zwischen der negativen Pfeilung und der positiven Pfeilung einen Bauch (22) aufweist, wobei das Schraubenblatt (13) **dadurch gekennzeichnet ist, dass** der Bauch (22) an einer radialen Position $z_v$ in einem Abstand zwischen 0,2•h und 0,4•h von dem Blattfuß (19) gelegen ist und dass jeder Blattabschnitt (18) eine Sehne entsprechend einer Funktion C(z) aufweist, deren Ableitung dC/dz ein erstes lokales Maximum (24) zwischen dem Blattfuß (19) und der Position $z_v$, ein lokales Minimum (25) zwischen der Position $z_v$ und einer radialen Position $z_t$ in einem Abstand zwischen 0,7•h und 0,8•h von dem Blattfuß (19) sowie ein zweites lokales Maximum (26) zwischen der Position $z_t$ und der Blattspitze (20) aufweist.

2. Schraubenblatt (13) nach Anspruch 1, bei dem jeder Blattabschnitt (18) einen Versatz in einer tangentialen Achse (Y) in Richtung der Aussenseite (16) entsprechend einer Funktion $y_g$(z) aufweist, deren Ableitung $dy_g$/dz ein lokales Maximum (28) und ein zweites lokales Minimum (29) zwischen der Position $z_t$ und der Blattspitze (20) aufweist.

3. Antriebsvorrichtung (1), umfassend eine mantellose stromaufwärtige Schraube (8) und eine gegenläufige und koaxiale stromabwärtige Schraube (9), wobei die stromaufwärtige Schraube (8) wenigstens ein Blatt (13) nach einem der Ansprüche 1 oder 2 umfasst, damit der sich mit dem Blattspitzenwirbel (10) des gleichen Blattes (13) mitdrehende Sekundärwirbel (11) den Blattspitzenwirbel (10) stromauf der stromabwärtigen Schraube (9) destabilisiert.

4. Verfahren zur Unterdrückung eines Wechselwirkungsgeräusches zwischen einer mantellosen stromaufwärtigen Schraube (8) und einer gegenläufigen und koaxialen stromabwärtigen Schraube (9), wobei wenigstens ein Blatt (13) der stromaufwärtigen Schraube (8) eine Vielzahl von Blattabschnitten (18), die entlang einer radialen Achse (Z) über eine Höhe h zwischen einem Blattfuß (19) und einer Blattspitze (20) gestapelt sind, umfasst, wobei jeder Blattabschnitt (18) sich zwischen einer Eintrittskante (14) und einer Austrittskante (17) sowie zwischen einer Innenseite (21) und einer Aussenseite (16) erstreckt, wobei die Eintrittskante (14) des Blattes (13) eine negative Pfeilung am Blattfuß (19), eine positive Pfeilung an der Blattspitze (20) sowie zwischen der negativen Pfeilung und der positiven Pfeilung einen Bauch (22) aufweist, und **dadurch gekennzeichnet, dass** der Bauch (22) an einer radialen Position $z_v$ in einem Abstand zwischen 0,2·h und 0,4·h von dem Blattfuß (19) gelegen ist und dass jeder Blattabschnitt (18) zwischen der Eintrittskante (14) und der Austrittskante (17) eine Sehne entsprechend einer Funktion C(z) aufweist, deren Ableitung dC/dz ein erstes lokales Maximum (24) zwischen dem Blattfuß (19) und der Position $z_v$, ein lokales Minimum (25) zwischen der Position $z_v$ und einer radialen Position $z_t$ in einem Abstand zwischen 0,7·h und 0,8·h von dem Blattfuß (19) sowie ein zweites lokales Maximum (26) zwischen der Position $z_t$ und der Blattspitze (20) aufweist, so dass ein Wirbel (10) der Blattspitze wenigstens eines Blattes (13) der stromaufwärtigen Schraube (8) stromauf der stromabwärtigen Schraube (9) durch einen durch das gleiche Blatt (13) erzeugten mitdrehenden Sekundärwirbel (11) destabilisiert wird.

**5.** Unterdrückungsverfahren nach Anspruch 4, wobei jeder Blattabschnitt (18) einen Versatz in einer tangentialen Achse (Y) in Richtung der Aussenseite (16) entsprechend einer Funktion $y_g(z)$ aufweist, deren Ableitung $dy_g/dz$ ein lokales Maximum (28) und ein lokales Minimum (29) zwischen der Position $z_t$ und der Blattspitze (20) aufweist.

**Claims**

**1.** A propeller blade (13) comprising a plurality of blade sections (18) stacked in a radial direction (Z) over a height h between a blade root (19) and a blade tip (20), each blade section (18) extending between a leading edge (14) and a trailing edge (17), and between a pressure side (21) and a suction side (16); and wherein the leading edge (14) presents negative sweep at the blade root (19), positive sweep at the blade tip (20), and between the negative sweep and the positive sweep, a convex portion (22) the propeller blade (13) being **characterized in that** the convex portion (22) is situated at a radial position $z_v$

at a distance lying in the range 0.2xh to 0.4xh from the blade root (19), and **in that** each blade section (18) presents a chord of function C(z) for which the derivative dC/dz presents a first local maximum (24) between the blade root (19) and the position $z_v$, a local minimum (25) between the position $z_v$ and a radial position $z_t$ lying at a distance in the range 0.7xh to 0.8xh from the blade root (19), and a second local maximum (26) between the position $z_t$ and the blade tip (20).

**2.** A blade root (13) according to claim 1, wherein each blade section (18) presents an offset along a tangential direction (Y) towards the suction side (16) in application of a function $y_g(z)$ for which the derivative $dy_g/dz$ presents a local maximum (28) and a local minimum (29) between the position $z_t$ and the blade tip (20).

**3.** A propulsive device (1) having an unducted upstream propeller (8) and a counter-rotating and coaxial downstream propeller (9), wherein the upstream propeller (8) has at least one blade (13) according to claim 1 or claim 2 so that the secondary vortex (11) corotating with the blade tip vortex (10) of the same blade (13) destabilizes said blade tip vortex (10) upstream from the downstream propeller (9).

**4.** A method of eliminating interaction noise between an unducted upstream propeller (8) and a counter-rotating and coaxial downstream propeller (9), wherein at least one blade (13) of the upstream propeller (8) has a plurality of blade sections (18) stacked along a radial axis (Z) over a height h between a blade root (19) and a blade tip (20), each blade section (18) extending between a leading edge (14) and a trailing edge (17), and between a pressure side (21) and a suction side (16), wherein the leading edge (14) of said blade (13) presents a negative sweep at the blade root (19), a positive sweep at the blade tip (20), and between the negative sweep and the positive sweep, a convex portion (22) and **characterized in that** the convex portion (22) presents a radial position $z_v$ at a distance lying in the range 0.2xh and 0.4xh from the blade root (19), and **in that** each blade section (18) presents, between the leading edge (14) and the trailing edge (17) a chord of function C(z) for which the derivative dC/dz presents a first local maximum (24) between the blade root (19) and the position $z_v$, a local minimum (25) between the position $z_v$ and a radial position $z_t$ at a distance of between 0,7xh and 0,8xh from the blade root (19,) and a second local maximum (26) between the position $z_t$ and the blade tip (20), in such a manner that the blade tip vortex (10) of at least one blade (13) of the upstream propeller (8) is destabilized upstream from the downstream propeller (9) by a corotating secondary vortex (11) generated by the same blade (13).

5.  A method according to claim 4, wherein each blade section (18) presents an offset along a tangential axis (Y) towards the suction side (16) in application of a function $y_g(z)$ having a derivative $dy_g/dz$ that presents a local maximum (28) and a local minimum (29) between the position $z_t$ and the blade tip (20).

FIG.1A

FIG.1B

FIG.2

FIG.3

FIG.4A          FIG.4B          FIG.4C

FIG.5

FIG.6A

FIG.6B

FIG.6C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5190441 A
- FR 2935349
- EP 2287072 A2